(19) **Europäisches Patentamt**

**European Patent Office**

**Office européen des brevets**

(11) **EP 0 897 359 B1**

(12) **EUROPÄISCHE PATENTSCHRIFT**

(45) Veröffentlichungstag und Bekanntmachung des Hinweises auf die Patenterteilung:
**18.09.2002 Patentblatt 2002/38**

(51) Int Cl.$^7$: **B60T 8/00**

(86) Internationale Anmeldenummer:
**PCT/EP97/02213**

(21) Anmeldenummer: **97921832.8**

(22) Anmeldetag: **30.04.1997**

(87) Internationale Veröffentlichungsnummer:
**WO 97/042066 (13.11.1997 Gazette 1997/49)**

(54) **VERFAHREN ZUR BESTIMMUNG EINES FAHRZEUG-SOLLVERHALTENS**

PROCESS FOR DETERMINING IDEAL VEHICULAR PERFORMANCE

PROCEDE POUR DETERMINER LE COMPORTEMENT THEORIQUE D'UN VEHICULE

(84) Benannte Vertragsstaaten:
**DE FR GB**

(30) Priorität: **02.05.1996 DE 19617590**

(43) Veröffentlichungstag der Anmeldung:
**24.02.1999 Patentblatt 1999/08**

(73) Patentinhaber: **Continental Teves AG & Co. oHG 60488 Frankfurt (DE)**

(72) Erfinder:
• **KRANZ, Thomas
D-61191 Rosbach (DE)**
• **DUIS, Holger
D-60488 Frankfurt am Main (DE)**
• **WANKE, Peter
D-60437 Frankfurt am Main (DE)**
• **ENDRESS, Ralf
D-65812 Bad Soden (DE)**

(74) Vertreter: **Blum, Klaus-Dieter
Continental Teves AG & Co. oHG,
Guerickestrasse 7
60488 Frankfurt (DE)**

(56) Entgegenhaltungen:
WO-A-90/06251          DE-A- 3 935 588
DE-A- 4 030 653

**Beschreibung**

Die vorliegende Erfindung betrifft ein Verfahren zur Bestimmung eines Fahrzeug-Sollverhaltens gemäß dem Oberbegriff des Anspruchs 1.

Ein solches Verfahren ist aus der DE 40 30 653 A1 bekannt. Die Druckschrift beschreibt ein Verfahren zur Bestimmung der Schräglaufwinkel und/oder der Seitenführungskräfte eines gebremsten Fahrzeugs. Ausgehend von einem vereinfachten Fahrzeugmodell und unter Verwendung der Einzelradgeschwindigkeiten, des Lenkwinkels, der Gierwinkelgeschwindigkeit und des Bremsdrucks als Meßgrößen werden die Schräglaufwinkel und/oder die Seitenführungskräfte als Schätzgrößen ermittelt. Trägt man in einem Diagramm die Seitenführungskräfte an einem Rad über dem aktuellen Schräglaufwinkel auf, so ergibt sich zumindest bei kleinen Schräglaufwinkeln eine lineare Beziehung. Die Steigung der Geraden, welche durch den Nullpunkt verläuft, bezeichnet man als Schräglaufsteifigkeit des jeweiligen Rades. Bei wachsendem Schräglaufwinkel allerdings wird die Beziehung zwischen Seitenführungskraft und Schräglaufwinkel nichtlinear. Mit wachsendem Schräglaufwinkel nähert sich die Seitenführungskraft einem Maximalwert, von dem sie im weiteren Verlauf der Kurve geringfügig wieder abfällt. Befinden sich die Schräglaufwinkel im nichtlinearen Bereich der Seitenkraft-Schräglaufwinkel-Kennlinie, so treten gravierende Unterschiede zwischen tatsächlicher und simulierter Gierwinkelgeschwindigkeit auf. Da beim bekannten Verfahren die Gierwinkelgeschwindigkeit gemessen wird, kann die Differenz zwischen gemessener und simulierter Gierwinkelgeschwindigkeit als Indikator für den Übergang vom linearen in den nichtlinearen Bereich der Seitenkraft-Schräglaufwinkel-Kennlinie herangezogen werden. Sobald das Verlassen des linearen Bereichs der Seitenkraft-Schräglaufwinkel-Kennlinie erkannt wird, wird der Zusammenhang zwischen Seitenführungskraft und Schräglaufwinkel näherungsweise durch eine Gerade mit geringerer Steigung beschrieben. Zur möglichst genauen Anpassung des Fahrzeugmodells an die realen Verhältnisse werden beim bekannten Verfahren die Schräglaufsteifigkeiten der Vorderräder und der Hinterräder entsprechend modifiziert, so daß die Seitenkraft-Schräglaufwinkel-Kennlinien beider Achsen angepaßt sind an die real verlaufende Kurve.

Im Rahmen einer Giermomentenregelung in einer Kurve wird generell ein neutrales Fahrverhalten angestrebt. Dies bedeutet, daß der Eigenlenkgradient nach Möglichkeit Null sein sollte. Dabei ist ein leichtes Untersteuern vom Fahrer durch zusätzlichen Lenkeinschlag leichter zu beherrschen als ein Übersteuern des Fahrzeugs. Ein neutrales Fahrverhalten liegt vor, wenn die Schräglaufsteifigkeiten der Hinterachse multipliziert mit dem Abstand der Hinterachse zum Fahrzeugschwerpunkt genauso groß sind wie die Schräglaufsteifigkeiten der Vorderachse multipliziert mit dem Abstand der Vorderachse zum Fahrzeugschwerpunkt. Ist dieses Produkt für die Hinterachse kleiner als das der Vorderachse, so liegt ein übersteuerndes Fahrverhalten vor. Die Grundauslegung heutiger Fahrzeuge ist in der Regel leicht untersteuernd. Das Fahrzeugmodell weist im linearen Bereich unter der Annahme, daß die Schräglaufsteifigkeiten vorn und hinten gleich sind, immer dann ein untersteuerndes Verhalten auf, wenn der Abstand der Hinterachse zum Fahrzeugschwerpunkt größer ist als der Abstand der Vorderachse, da die Schräglaufsteifigkeiten einen konstanten Wert einnehmen. Werden jedoch die Schräglaufsteifigkeiten bei zunehmendem Schräglaufwinkel kleiner, so kann es vorkommen, daß sich die Schräglaufwinkel der Hinterachse schon in einem Bereich befinden, in welchem die Schräglaufsteifigkeiten reduziert sind, während die Vorderachse sich noch im linearen Bereich der Seitenkraft-Schräglaufwinkel-Kennlinie befindet. In diesem Moment weist dann das Fahrzeugmodell ein übersteuerndes Verhalten auf. Dies ist insbesondere dann gefährlich, wenn das verwendete Fahrzeugmodell zur Berechnung einer Sollwertvorgabe, beispielsweise der Sollgierwinkelgeschwindigkeit, dient. Dann würde dem Fahrzeugregler eine Vorgabe gemacht, die einem übersteuernden Fahrverhalten entspricht und daher einen Regeleingriff bedingt, der das Fahrzeug zum Übersteuern bringt. Dies ist gefährlich, da ein Übersteuern wesentlich schlechter vom Fahrer gehandhabt werden kann als ein Untersteuern. Auch wenn das reale Fahrzeug ohne Regeleingriff in ein übersteuerndes Fahrverhalten gerät, wird vom Fahrzeugregler zunächst kein Eingriff vorgenommen, da ein solches Verhalten dann ja der Sollwertvorgabe entspricht.

Die Aufgabe der vorliegenden Erfindung besteht darin, ein Verfahren zur Bestimmung eines Fahrzeugsollverhaltens gemäß dem Oberbegriff des Anspruchs 1 zu schaffen, welches zwar auch dem nichtlinearen Bereich der Seitenkraft-Schräglaufwinkel-Kennlinie Rechnung trägt, bei welchem aber eine Sollwertvorgabe, die einem übersteuernden Fahrverhalten entspricht, nicht auftreten kann.

Diese Aufgabe wird gelöst in Verbindung mit den kennzeichnenden Merkmalen des Anspruchs 1. Das Prinzip der Erfindung liegt darin, daß an der Hinterachse die Schräglaufsteifigkeiten konstant gehalten werden, so daß es unerheblich ist, wie groß die Schräglaufwinkel an der Hinterachse sind. Die Schräglaufsteifigkeiten des Fahrzeugmodells an der Hinterachse können in keiner Fahrsituation kleiner werden als die der Vorderachse, da sie stets dem Maximalwert der Vorderachse entsprechen. Die Sollwertvorgabe kann demnach höchstens einem neutralen oder leicht untersteuernden Fahrverhalten entsprechen, also Fahrsituationen, die vom Fahrer gut beherrscht werden können.

Bei weiter zunehmenden Schräglaufwinkeln kann dann auch die Seitenkraft-Schräglaufwinkel-Kennlinie der Vorderachse dem Verlauf der realen Kurve angepaßt werden, indem ab einem bestimmten Schräglaufwinkel die Seitenführungskraft konstant auf einem Maximalwert bleibt.

Da die größte Seitenführungskraft beim Durchfahren einer Kurve vom kurvenäußeren Vorderrad aufgebracht wird, ist die Anpassung der Seitenkraft-Schräglaufwinkel-Kennlinie der Vorderachse an den realen Verlauf mit einer höheren Regelgüte verbunden. Eine Instabilität bei der Berechnung des Fahrzeugzustandes auch bei Steigung Null kann nicht auftreten, da an der Hinterachse jeweils einer bestimmten Seitenführungskraft ein Schräglaufwinkel eindeutig zugeordnet werden kann.

Die Reduktion der Schräglaufsteifigkeiten der Vorderachse kann beim Überschreiten eines bestimmten Schräglaufwinkels oder eines Schwellenwertes einer mit dem Schräglaufwinkel eindeutig korrelierenden Größe beginnen, wobei dasselbe sowohl für die Reduktion zu einer Steigung der Seitenkraft-Schräglaufwinkel-Kennlinie auf einen kleineren Wert als auch auf Null gilt. Die jeweils die Reduktion der Steigung auslösenden Schräglaufwinkel oder die korrelierenden Größen können dabei reibwertabhängig bestimmt sein, so daß ein um so kleinerer Schräglaufwinkel die Schwelle für den Beginn und die Verstärkung der Reduktion der Schräglaufsteifigkeiten ist, je kleiner der Reibwert zwischen Fahrbahn und Reifen ist.

Die weiteren Unteransprüche geben bevorzugte Beziehungen zwischen den Schwellen-Schräglaufwinkeln und dem Fahrbahnreibwert an.

Eine nähere Erläuterung des Erfindungsgedankens erfolgt nun anhand der Beschreibung einer Zeichnung.

Die einzige Figur stellt ein Diagramm dar, in welchem die Seitenführungskraft an der Vorderachse des verwendeten Einspurmodells über dem Schräglaufwinkel der Vorderachse eingetragen ist mit dem Reibwert $\mu$ zwischen Fahrbahn und Reifen als Parameter.

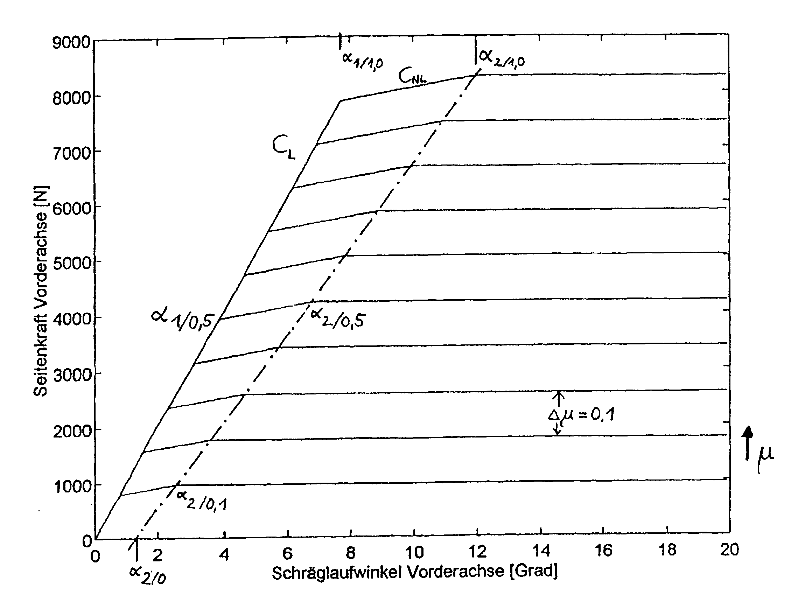

Der Verlauf der realen Seitenkraft-Schräglaufwinkel-Kennlinie ist der einschlägigen Fachliteratur zu entnehmen, beispielsweise Zomotor, Fahrwerktechnik: Fahrverhalten, Vogel-Verlag, Würzburg, 2. Auflage 1991 (Bild 2.27).

Die dargestellte Kurvenschar zeigt die Abhängigkeit der Seitenführungskraft vom Schräglaufwinkel in Reibwertschritten von $\Lambda\mu = 0,1$. Die Schräglaufsteifigkeit berechnet sich jeweils aus der Steigung der Geraden, die den Nullpunkt mit dem Arbeitspunkt auf der Kennlinie verbindet, also als

$$C_i = F_{si}/\alpha_i.$$

Im linearen Bereich, also bis zum Erreichen eines bestimmten Schräglaufwinkel-Schwellenwertes $\alpha_{1/\mu}$ ist die Steigung $C_L$ der der Kurve zugrundeliegenden Geraden, die durch den Nullpunkt führt, gleich der Schräglaufsteifigkeit. Zwischen den beiden Schwellenwerten $\alpha_{1/\mu}$ und $\alpha_{2/\mu}$ ist die Steigung des Kurvenabschnittes erheblich reduziert und zwar auf den Wert $C_{NL}$. Jenseits des Schwellenwertes $\alpha_{2/\mu}$ schließlich besitzt jede Kurve die Steigung Null. Die Schräglaufsteifigkeit wurde also fortlaufend reduziert. Welcher Schräglaufwinkel jeweils als Schwellenwert für die Reduzierung der Schräglaufsteifigkeit zur Steigung $C_{NL}$ bzw. zur Steigung Null der Seitenkraft-Schräglaufwinkel-Kennlinie hin angesetzt wird, ist reibwertabhängig. Statt eines Schräglaufwinkels kann als Schwellenwert beispielsweise die zugeordnete Seitenführungskraft herangezogen werden.

Im dargestellten Ausführungsbeispiel ist der Schwellenwert $\alpha_{1/\mu}$ etwa folgendermaßen angesetzt:

$$\alpha_{1/\mu} = 7,7° * \mu$$

Für den zweiten Schwellenwert, bei welchem die Schräglaufsteifigkeiten stärker reduziert werden, so daß die Steigung der Seitenkraft-Schräglaufwinkel-Kennlinie zu Null wird, gilt etwa folgende Beziehung:

$$\alpha_{2/\mu} = 1,3° + 10,7° * \mu$$

Für Schräglaufwinkel $\alpha < \alpha_{1/0,5}$ berechnet sich nach dem Ausführungsbeispiel die Seitenführungskraft an der Vorderachse zu

$$F_S = C_L * \alpha$$

Befindet sich der Schräglaufwinkel an der Vorderachse im Bereich zwischen $\alpha_{1/\mu}$ und $\alpha_{2/\mu}$, so errechnet sich die aufgebrachte Seitenführungskraft des Fahrzeugmodells auf

$$F_S = C_L * \alpha 1/\mu + C_{NL} * (\alpha - \alpha_{1/\mu})$$

Jenseits von $\alpha_{2/\mu}$ bleibt die Seitenführungskraft konstant, die Schräglaufsteifigkeiten sind so reduziert, daß die Steigung der Seitenkraft-Schräglaufwinkel-Kennlinie zu Null wird , so daß die maximale Seitenführungskraft sich folgendermaßen ergibt:

$$F_{smax} = C_L * \alpha_{1/\mu} + C_{NL} * (\alpha_{2/\mu} - \alpha_{1/\mu})$$

Wie $C_L$ für ein Fahrzeug bestimmt werden kann, ergibt sich hinreichend aus der einschlägigen Fachliteratur. $C_{NL}$ kann beispielsweise als feste Zahl oder als fester Bruchteil von $C_L$ abgespeichert werden. Die Größen $C_L$ und $C_{NL}$ sind jedenfalls fahrzeugspezifisch zu ermitteln.

Anhand der Darstellung kann hier noch einmal genauer erklärt werden, warum sich eine derartige Kennlinie für Vorderachsräder und Hinterachsräder nicht eignet, um mittels eines Fahrzeugmodells Sollvorgaben für das Fahrzeug zu ermitteln. Unter der Annahme, daß ein derartiges Diagramm auch für die Hinterachse des Fahrzeugs Gültigkeit haben soll, wäre es möglich, daß die Hinterräder, deren Schwellenwerte $\alpha_1$ und $\alpha_2$ anders gelagert sein können als die der Vorderräder, sich schon in einem Kurvenbereich verringerter Steigung befinden, während die Vorderräder noch einen Schräglaufwinkel aufweisen, der im linearen Bereich der Kennlinie liegt. In diesem Fall würde sich für das Fahrzeugmodell ein negativer Eigenlenkgradient berechnen, die Sollvorgabe also einem übersteuernden Fahrverhalten entsprechen.

Abgesehen davon enthält das Modell aufgrund der Form seiner Gierübertragungsfunktion im instationären Bereich Arbeitspunkte, die bei Modifikation auch der Schräglaufsteifigkeiten der Hinterachse ein Aufschwingen der Sollwertvorgabe bei Störunganregung ermöglichen, weil das Dämpfungsmaß bei übersteuernden Fahrzeugen kleiner als Null wird. Die Sollwertvorgabe wird falsch.

Bei der linearen Vereinfachung, bei welcher die Kennlinie keine Knickpunkte aufweist, kann ein solches Problem nicht auftreten, da unabhängig vom Arbeitspunkt auf der Kennlinie die Schräglaufsteifigkeiten sich niemals unterscheiden können. Verwendet man aber eine solche Kennlinie, so sollte man sichergehen, daß die Schräglaufsteifigkeiten der Hinterachse niemals kleiner werden als die der Vorderachse. Die Modifikation der Schräglaufsteifigkeiten nur der Vorderachse ermöglicht zwar einerseits eine Anpassung des Einspurmodells an die Realität, macht andererseits aber eine Sollwertvorgabe, die einem übersteuernden Fahrverhalten entspricht, unmöglich.

Verschiedene Verfahren zur Beeinflussung des Fahrverhaltens sehen eine Bestimmung des Reibwertes zwischen Fahrbahn und Reifen nur dann vor, wenn gerade eine Regelung stattfindet. Bei der praktischen Umsetzung der reibwertabhängigen Modifikation der Schräglaufsteifigkeiten ergibt sich dann die Schwierigkeit, daß bei stabiler Fahrt immer Hochreibwert $\mu \geq 1$ angenommen wird und der Reibwert erst bei Regelungseintritt an die tatsächliche Fahrbahnbeschaffenheit angepaßt werden kann. Das bedeutet, daß der Parameter Reibwert sprunghaft verändert wird und das Modell ohne geeignete Maßnahmen unplausible Einschwingvorgänge durchlaufen würde.

Die Zustandsgrößen des Modells sind also zu Beginn der Reibwertschätzung auf Anfangswerte zu setzen, die zum Reibwert passen. Dabei werden im Normalfall die Werte von Gierbeschleunigung und Schwimmwinkelgeschwindigkeit zu Null gesetzt, da von einem stationären Anfangszustand ausgegangen wird. Es wäre aber auch möglich, diese Anfangswerte zur Vorgabe eines bestimmten dynamischen Verhaltens beliebig anzusetzen.

Das Setzen der Zustandsgrößen auf Anfangswerte kann dabei an eine oder mehrere Bedingungen geknüpft sein: Zum einen kann vorgeschrieben sein, daß sich das Modell bereits im nichtlinearen Teil der Seitenkraft-Schräglaufwinkel-Kennlinie befinden soll, da in den meisten Fällen erst hier ein Regelabweichung zu erwarten ist und somit eine Reibwertschätzung einsetzt. Zum anderen kann zur Bedinngung gemacht werden, daß die Anfangswerte nur dann gesetzt werden, wenn der Reibwert sich tatsächlich vom Hochreibwert um einen bestimmten Betrag unterscheidet. Der aktuelle Reibwert sollte hierbei also kleiner sein als ein bestimmter Schwellenwert. Anderenfalls ist eine Anpassung der Anfangswerte nicht notwendig. Alternativ kann aber auch ohne Bedingungen eine ständige Übernahme der Anfangswerte erfolgen

Die Gierwinkelgeschwindigkeit des Fahrzeugmodells kann beispielsweise auf ihren bei optimaler Reibwertausnutzung erreichbaren Maximalwert gesetzt werden, nämlich

$$\frac{\mu \, ] \, g}{v_{REF}}$$

wobei g die Erdbeschleunigung und $v_{REF}$ die Fahrzeug-Referenzgeschwindigkeit darstellt. Der Vorteil dieses Ansatzes liegt im engen Bezug zur Physik.

Eine andere Möglichkeit zur Berechnung des Anfangswertes der Gierwinkelgeschwindigkeit des Fahrzeugmodells ist die Übernahme des zum aktuellen Lenkwinkel passenden stationären Endwertes nach dem linearen Einspurmodell. Der Vorteil liegt bei dieser Version darin, daß der berechnete Wert der Gierwinkelgeschwindigkeit besser zum Einspurmodell paßt. Allerdings gilt dies nur im stabilen Bereich des Einspurmodells und damit auch des zu stabilisierenden Fahrzeugs. Im instabilen Bereich bei Überschreiten des physikalischen Grenzwertes liefert dieser Berechnungsansatz falsche, unzulässig hohe, einem stationären Verhalten entsprechende Endwerte. Dies liegt daran, daß der Lenkwinkel des Fahrzeugs in die Berechnung eingeht und dadurch die berechnete Gierwinkelgeschwindigkeit unbegrenzt mit dem Lenkwinkel anwächst. Der Anfangswert kann dann bei einem progressiven Einlenken über den stabilen Kurvenbereich hinaus ein Eintreten in die Regelung verhindern, weshalb ein solcher Ansatz nur mit einer Begrenzung des Maximalwertes der Gierwinkelgeschwindigkeit verwendet werden darf.

Der nach einem der beiden vorgenannten Ansätze bestimmte Anfangswert kann allerdings um einen gewissen Prozentsatz angehoben werden, um einmal das Überschwingen des realen Fahrzeugs beim Einlenken zu berücksichtigen und zum anderen den zu Beginn der Regelung meist etwas zu niedrig berechneten Reibwert zu kompensieren. Der Gesichtspunkt, daß bei Eintritt in die Regelung die optimale Seitenkraftausnutzung noch nicht erreicht ist, kann auch dadurch ausgeglichen werden, daß bei der Reibwerterkennung der berechnete Reibwert heraufgesetzt wird.

Der Anfangswert für den Modellschwimmwinkel kann ebenfalls mit verschiedenen Ansätzen berechnet werden.

Im einfachsten Fall wird der Schwimmwinkel zu Null gesetzt. Dann ergeben sich auf Niedrigreibwert keine allzu großen Gierwinkelbeschleunigungen, und die auftretenden Einschwingvorgänge sind stark gedämpft, so daß es zu keinem Überschwingen kommt. Dies gilt allerdings nur für Niedrigreibwert, nicht für Hochreibwert.

Ein weiterer Ansatz berücksichtigt, daß es für die Konditionierung des Differentialgleichungssystems wünschenswert ist, wenn die Steigung der Gierwinkelgeschwindigkeit, also die Gierwinkelbeschleunigung, beim Eintritt in die Regelung mit Null beginnt. Unter der beim Eintritt in die Regelung normalerweise zulässigen Annahme, daß sich die Seitenkraft an der Vorderachse in der Nähe ihrer Maximalausnutzung befindet, kann ein Schwimmwinkel so berechnet werden, daß die Gierbeschleunigung den Wert Null einnimmt. Der Schwimmwinkel liegt dann jedoch nicht immer im erlaubten Wertebereich. Außerdem kann das Modell durch die meist zu großen Schwimmwinkel stark angeregt werden, so daß der Vorteil der anfangs horizontal verlaufenden Gierwinkelgeschwindigkeit wieder aufgehoben wird.

Ein dritter Ansatz geht daher weiter: Unter der Annahme, daß die Seitenkraft sich im Bereich ihrer Maximalausnutzung befindet und somit auch die Gierwikelgeschwindigkeit ihren Maximalwert, also

$$\frac{\mu \, ] \, g}{v}$$

einnimmt. Eingesetzt in die Vorgabe, daß Die Gierwinkelbeschleunigung und die Schwimmwinkelgeschwindigkeit gleich Null sein sollen, läßt sich ein geeigneter Anfangswert für den Schwimmwinkel ermitteln.

Ein vierter Ansatz sieht vor, den Schwimmwinkel auf den zuletzt berechneten Wert vor Eintritt der Regelung zu belassen. Damit können sich jedoch auf Niedrigreibwert unerwünscht hohe Anfangssteigungen der Gierwinkelgeschwindigkeit ergeben, die ebenfalls starke Einschwingvorgänge des Modells bedingen. Denn der alte Schwimmwinkel vor Eintritt in die Regelung wurde unter der Annahme von Hochreibwert berechnet. Bei wechseldynamischen Fahrmanövern kann der Schwimmwinkel dann bei Werten liegen, die nicht zum stationären Arbeitspunkt des Einspurmodells passen.

Ein fünfter Ansatz schließlich geht von einem empirisch ermittelten Anfangswert für den Schwimmwinkel aus. Dafür ist es notwendig, einen Zusammenhang zwischen Reibwert und Schwimmwinkel zu finden. Der Anfangswert des Schwimmwinkels stellt dann prinzipiell den stationären Endwert an der Stabilitätsgrenze dar. Allgemein wird hierzu ein Polynom angesetzt, wobei in erster Näherung als Vereinfachung eine Geradendarstellung verwendet wird.

Wie sich gezeigt hat, ist nicht jeder Ansatz zur Anfangswertbestimmung für jeden Fahrbahnreibwert geeignet. Es ist nun möglich, reibwertabhängig den jeweils geeigneten Ansatz zur Anfangswertbestimmung zu verwenden. Ziel sollte es aber sein, möglichst einen gemeinsamen, geschlossenen Ansatz über den gesamten Reibwertbereich einzusetzen.

Wichtig bei der Übernahme der Anfangswerte ist es, daß diese nur dann in das Modell übernommen werden, wenn der Anfangswert der Gierwinkelgeschwindigkeit bei gleichem Vorzeichen betragsmäßig kleiner ist als die vom Modell errechnete aktuelle Gierrate unter der Annahme eines Hochreibwerts. Andernfalls wird das Modell mit dem aktuellen Wert der Gierwinkelgeschwindigkeit weitergerechnet.

Wurden jedoch die Anfangswerte übernommen, dann gibt es zwei Möglichkeiten für den weiteren Verlauf der Modellberechnung. Ist die Regelabweichung trotz Übernahme von angepaßten Anfangswerten immer noch größer als die Eintrittsschwelle zur Giermomentenregelung, so wird die Regelung aktiviert und eine Reibwertberechnung fortgeführt. Ausgehend von den übernommenen Anfangswerten wird das Modell mit aktualisiertem Reibwert weitergerechnet. Wird allerdings durch Übernahme der Anfangswerte und des aktuell errechneten Reibwertes die Eintrittsschwelle zur Regelung wieder unterschritten, so wird die Regelung nicht aktiviert und der Reibwert wieder auf Hochreibwert gesetzt.

Wenn bei Übernahme der Anfangswerte die Regelungsschwelle unterschritten wird und somit eine Regelung nicht einsetzt, kann alternativ die Reibwertberechnung fortgeführt werden, bis die Kurvenfahrt beendet ist oder bis eine neue, niedrigere Austrittsschwelle für die Reibwertschätzung unterschritten wird. Allerdings wird bei der oben beschriebenen Vorgehensweise davon ausgegangen, daß eine verläßliche Reibwertschätzung nur im Bereich der vollen Seitenkraftausnutzung durchgeführt werden kann. Die beschriebene Alternative könnte allerdings dazu führen, daß ein zu niedrig geschätzter Reibwert zu einem ungerechtfertigten, übersteuernden Regelungseintritt führt.

Wenn bei der Übernahme der Anfangswerte die Regelungsschwelle unterschritten bleibt und somit eine Regelung nicht eintritt, bietet sich eine weitere Möglichkeit der Fortführung des Verfahrens. Es kann beispielsweise das Modell wieder sofort auf die zu einem Hochreibwert passenden Zustandsgrößen gesetzt werden, die eine Überschreitung der Regelschwellen angezeigt haben. Dann müssen die Zustandsgrößen nicht aufgrund der Vorgabe eines Hochreibwertes allmählich wieder angepaßt werden. Wenn das sogenannte Hochlaufen der Modellgrößen schnell genug verläuft, ist eine Zurücksetzung der Zustandsgrößen nicht notwendig. Die allmähliche Anpassung der Zustandsgrößen hat zusätzlich den Vorteil, daß eine Anregung des Modells zu Einschwingvorgängen unterbleibt. Diese Anregung kann Aber auch dadurch vermieden werden, daß beim Zurücksetzen der Zustandsgrößen die vor Übernahme der Anfangswerte zuletzt berechneten Zustandsgrößen übernommen werden und in der laufenden Rechenschleife aktualisiert werden. In jedem Fall sollte vermieden werden, daß aufgrund zu niedrig gewählter Anfangswerte, z.B. zu niedriger Reibwerte, ein ungerechtfertigter Regeleingriff provoziert wird, der das Fahrzeug zu stark untersteuerndem Verhalten zwingt.

**Patentansprüche**

1. Verfahren zur Bestimmung eines Fahrzeugsollverhaltens im Rahmen einer Regelung des Fahrverhaltens eines zweiachsigen Fahrzeugs in einer Kurve, wobei zur Anpassung eines linearen Einspurmodells an ein reales Fahrzeug die Schräglaufsteifigkeiten mit wachsendem Schräglaufwinkel fortlaufend so reduziert werden, daß die Steigung der Seitenkraft-Schräglaufwinkel-Kennlinie einen kleineren, von Null verschiedenen Wert ($C_{NL}$) annimmt, **dadurch gekennzeichnet, daß** die Schräglaufsteifigkeiten ($C_L$) nur der Räder der Vorderachse reduziert werden.

2. Verfahren nach Anspruch 1, **dadurch gekennzeichnet, daß** bei Annäherung der Seitenkraft-Schräglaufwinkel-Kennlinie des realen Fahrzeugs an einen Maximalwert die Schräglaufsteifigkeiten mit wachsendem Schräglaufwinkel fortlaufend so reduziert werden, **daß** die Steigung der Seitenkraft-Schräglaufwinkel-Kennlinie zu Null wird.

3. Verfahren nach Anspruch 1 oder 2, **dadurch gekennzeichnet, daß** die Reduktion zu geringerer Steigung und zur Steigung Null der Seitenkraft-Schräglaufwinkel-Kennlinie hin beim Überschreiten jeweils eines bestimmten Schwellenwertes eines berechneten oder gemessenen Schräglaufwinkels ($\alpha_{1/\mu}$, ($\alpha_{2/\mu}$) oder einer mit dem Schräglaufwinkel eindeutig korrelierenden Größe erfolgt.

4. Verfahren nach Anspruch 3, **dadurch gekennzeichnet, daß** die bestimmten Schwellenwerte ($\alpha_{1/\mu}$, $\alpha_{2/\mu}$) abhängig sind von einem berechneten Fahrbahnreibwert ($\mu$), nämlich umso größer, je höher der Fahrbahnreibwert ist.

5. Verfahren nach Anspruch 4, **dadurch gekennzeichnet, daß** der bestimmte Schräglaufwinkel $\alpha_{1/\mu}$ zur Reduktion der Schräglaufsteifigkeiten $C_L$ zum kleineren Wert $C_{NL}$ der Steigung hin direkt proportional zum Fahrbahnreibwert $\mu$ ist.

6. Verfahren nach Anspruch 5, **dadurch gekennzeichnet, daß** der bestimmte Schräglaufwinkel $\alpha_{1/\mu}$ zur Reduktion der Schräglaufsteifigkeiten zum kleineren Wert $C_{NL}$ der Steigung hin nach der Gleichung $\alpha_{1/\mu} = k_1 * \mu$ berechnet wird, wobei $k_1$ eine

fahrzeugtypspezifisch ermittelte Konstante ist.

7. Verfahren nach Anspruch 4, **dadurch gekennzeichnet, daß** der bestimmte Schräglaufwinkel $\alpha2/\mu$ zur Reduktion der Schräglaufsteifigkeiten zur Steigung Null hin in folgender Beziehung zum Reibwert steht: $\alpha_{2/\mu} = \alpha_{2/0} + k_2 * \mu$, wobei $k_2$ und $\alpha_{2/0}$ konstante, fahrzeugtypspezifisch ermittelte Faktoren sind.

**Claims**

1. A method of determining the nominal driving behavior of a vehicle during control of the driving behavior of a two-axle vehicle in a curve, wherein - for adapting a linear one-track model to a real vehicle - the lateral tire stiffness values with a growing tire slip angle are continually so reduced that the slope of the lateral force/tire slip angle characteristic assumes a smaller value ($C_{NL}$) other than zero, **characterized in that** the lateral tire stiffness values ($C_L$) only of the wheels of the front axle are reduced.

2. A method according to claim 1, **characterized in that** once the lateral force/tire slip angle characteristic of the real vehicle approaches a peak value, the lateral tire stiffness values with a growing tire slip angle are continually so reduced that the slope of the lateral force/tire slip angle characteristic becomes zero.

3. A method according to claim 1 or 2, **characterized in that** the reduction toward a reduced slope and toward a zero slope of the lateral force/tire slip angle characteristic is effected once a predetermined threshold of a computed or measured tire slip angle ($\alpha_{1/\mu}$, $\alpha_{2/\mu}$) or a variable clearly correlated to the tire slip angle is exceeded.

4. A method according to claim 3, **characterized in that** the determined threshold values ($\alpha_{1/\mu}$, $\alpha_{2/\mu}$) are dependent on a calculated road friction coefficient ($\mu$), i.e., they are the greater the higher the road friction coefficient is.

5. A method according to claim 4, **characterized in that** the determined tire slip angle $\alpha_{1/\mu}$ for reduction of the lateral tire stiffness values $C_L$ toward the smaller value $C_{NL}$ of the slope is directly proportional to the road friction coefficient $\mu$.

6. A method according to claim 5, **characterized in that** the determined tire slip angle $\alpha_{1/\mu}$ for reduction of the lateral tire stiffness values toward the smaller value $C_{NL}$ of the slope is computed in accordance with equation $\alpha_{1/\mu} = k_1 * \mu$, with

$k_1$ being a constant value determined in a vehicle-specific way.

7. A method according to claim 4,
   **characterized in that** the determined tire slip angle $\alpha_{2/\mu}$ for reduction of the lateral tire stiffness values toward a zero slope has the following correlation to the friction coefficient: $\alpha_{2/\mu} = \alpha_{2/0} + k_2 * \mu$, with $k_2$ and $\alpha_{2/0}$ being constant factors determined in a vehicle-specific way.

## Revendications

1. Procédé pour déterminer le comportement de consigne d'un véhicule dans le cadre d'une régulation de la conduite d'un véhicule à deux essieux dans une courbe, dans lequel pour l'adaptation d'un modèle linéaire à une voie à un véhicule réel, on réduit en continu les rigidités d'inclinaison axe-pivot au fur et à mesure que l'angle d'inclinaison axe-pivot augmente, de manière que la pente de la courbe caractéristique force latérale - angle inclinaison axe-pivot prenne une valeur ($C_{NL}$) plus petite, différente de zéro, **caractérisé en ce que** seules les rigidités d'inclinaison axe-pivot ($C_L$) des roues de l'essieu avant soient réduites.

2. Procédé selon la revendication 1, **caractérisé en ce que** lorsque la courbe caractéristique force latérale - angle d'inclinaison axe-pivot du véhicule réel approche d'une valeur maximale, on réduit en continu les rigidités d'inclinaison axe-pivot au fur et à mesure que l'angle d'inclinaison axe-pivot augmente, de manière que la pente de la courbe caractéristique force latérale - angle d'inclinaison axe-pivot s'annule.

3. Procédé selon la revendication 1 ou 2, **caractérisé en ce que** la réduction vers une pente réduite et vers une pente zéro de la courbe caractéristique force latérale - angle d'inclinaison axe-pivot s'effectue au dépassement d'une valeur seuil déterminée d'un angle d'inclinaison axe-pivot calculé ou mesuré ($\alpha_{1/\mu}$, $\alpha_{2/\mu}$) ou d'une grandeur clairement corrélée à l'angle d'inclinaison axe-pivot.

4. Procédé selon la revendication 3, **caractérisé en ce que** les valeurs seuil ($\alpha_{1/\mu}$, $\alpha_{2/\mu}$) déterminées dépendent d'un coefficient de friction de la chaussée ($\mu$) calculé, à savoir qu'elles sont d'autant plus grandes que le coefficient de friction de la chaussée est élevé.

5. Procédé selon la revendication 4, **caractérisé en ce que** l'angle d'inclinaison axe-pivot (($\alpha_{1/\mu}$) déterminé pour la réduction des rigidités de l'angle d'inclinaison axe-pivot ($C_L$) vers la plus petite valeur

($C_{NL}$) de la pente, est directement proportionnel au coefficient de friction de la chaussée ($\mu$).

6. Procédé selon la revendication 5, **caractérisé en ce que** l'angle d'inclinaison axe-pivot $\alpha_{1/\mu}$ déterminé pour la réduction des rigidités de l'angle d'inclinaison axe-pivot vers la plus petite valeur $C_{NL}$ de la pente, est calculé suivant l'équation $\alpha_{1/\mu} = k_1 * \mu$, $k_1$ étant une constante déterminée spécifique du type du véhicule.

7. Procédé selon la revendication 4, **caractérisé en ce que** l'angle d'inclinaison axe-pivot $\alpha_{2/\mu}$ déterminé pour la réduction des rigidités d'inclinaison axe-pivot vers la pente zéro, se trouve dans la relation suivante avec le coefficient de friction : $\alpha_{2/\mu} = \alpha_{2/0} + k_2 * \mu$ ; $k_2$ et $\alpha_{2/0}$ étant des facteurs constants, déterminés et spécifiques du type du véhicule.